# EUROPEAN PATENT SPECIFICATION

(11) **EP 0 512 739 B1**
(45) Date of publication and mention of the grant of the patent: **06.11.1996**
(21) Application number: 92303854.1
(22) Date of filing: 29.04.1992
(51) Int. Cl.: A01N 43/90, A01N 47/36

(54) **Herbicidal compositions with reduced phytotoxicity**
Herbizide Zusammensetzungen mit reduzierter Phytoxitität
Compositions herbicides avec phytotoxicité réduite

(30) Priority: 03.05.1991 GB 9109599
(43) Date of publication of application: 11.11.1992
(73) Proprietor: DOWELANCO, Indianapolis, Indiana 46268-1189 (US)
(72) Inventor: Mulqueen, Patrick J., Abingdon, Oxon OX14 3YJ (GB); Hart, Dawn, Wantage, Oxon OX12 9EY (GB); Paterson, Eileen A., Wantage, Oxon OX12 7NS (GB)
(74) Representative: Raynor, John

(56) References cited:
- EP-A- 0 124 295
- US-A- 4 547 215

## Description

The present invention is directed to herbicidal compositions, and in particular to employing sulfonamide and sulfonylurea herbicides for the selective post-emergent kill and control of broadleaf weeds growing in the presence of grassy crop plants. The present invention is specifically directed to an improved method for reducing the phytotoxicity of said formulations toward grassy crop plants which comprises admixing said formulation with an amount of an inorganic or organic acid sufficient to reduce the pH of said formulation to below the pKa of said sulfonamide or sulfonylurea herbicide and adding thereto a cationic surfactant; in addition, the formulations as concentrates and the agricultural uses of said formulations in water diluted form constitute a part of this invention.

Various herbicides, such as, for example, those of the sulfonamide and sulfonylurea classes are known to be active as selective post-emergent weed control agents. Many times when these compounds are employed at the dosage rates usually necessary for the control of many of the broadleaf weeds, serious loss of some sensitive broadleaf and/or grassy crop plants occur. In other procedures, the sulfonamide and sulfonylurea herbicidal compounds are mixed with a cationic surfactant in order to obtain better penetration of the herbicides into the broadleaf weeds. One undesirable side effect of this later treatment procedure is an increase in the damage to grassy crop plants.

One procedure to overcome the above indicated sensitivity responses of plants to the various sulfonamide and sulfonylurea herbicidal compounds involve varying the dosage rate. However, when a reduction in the dosage rate is used to avoid phytotoxicity to the crop plants, reduced weed control is often the result.

Another procedure involves changing the time of application or modifying the ingredients used in the formulations containing the active compound. Other known procedures include treatment of the seeds of the crop plants with an agent antagonistic to the herbicide prior to planting as described in U.S. Patent 3,131,509.

It would be desirable if a procedure could be found which would allow for the selective uptake of the herbicide into the crop and or weed plants resulting in safety to the crop plants while maintaining or increasing activity against the weeds.

U.S Patents 4,127,405 and 4,547,215 are directed to certain sulfonamides and their use as selective herbicides. It is further indicated that the claimed compounds can be used in combination with other herbicides, including herbicidal acids.

U.S Patent 4,840,663 teaches the control of weeds in rice by the use of a synergistic mixture of N-[2-(2-methoxyethoxy)-phenylsulphonyl]-N′-(4,6-dimethoxy-1,3,5-triazin-2-yl)-urea and a herbicidal compound selected from fourteen (14) different groupings of different type of herbicides. A few of the groupings include various herbicidal organic acids or acid esters.

U.S Patent 4,936,900 is directed to stabilized compositions having a pH of 6-10 containing a mixture of a sulfonylurea or one of its agriculturally suitable salts with a salt or mixture of salts of a carboxylic or inorganic acid. It is further indicated that other herbicides may be added to the mixture including some herbicidal acids and their agriculturally suitable salts and esters.

The present invention is directed to a herbicidal composition suitable for dilution with water before use, comprising
a. a sulfonamide or sulfonylurea herbicide, together with
b. an inorganic or organic acid, and
c. a cationic surfactant, wherein the amount of the inorganic or organic acid is sufficient to reduce the pH of the solution obtained by formulating the composition with water to a strength suitable for use such that the resulting pH is below the pKa of the said herbicide.
   The invention also provides an aqueous herbicidal composition, comprising
d. a sulfonamide or sulfonylurea herbicide, together with
e. an inorganic or organic acid, and
f. a cationic surfactant,
   wherein the concentration of the herbicide in the composition is such that the aqueous composition is suitable for direct application as a post-emergent herbicide, and wherein the amount of the inorganic or organic acid in the aqueous composition is sufficient to reduce the pH of the composition to below the pKa of the said herbicide.

In a further aspect, the invention provides the use of an inorganic or organic acid, and a cationic surfactant to reduce the pH of an aqueous herbicidal composition comprising the sulfonamide or sulfonylurea herbicide to below the pKa of said herbicide, thereby to reduce the phytotoxicity of the said herbicide.

The novel formulations of the invention enable the phytotoxicity of said sulfonamide or sulfonylurea herbicides to said crop plants to be reduced.

In preparing the active formulation of the present invention, the sulfonamide or sulfonylurea herbicide is mixed with the acid in an amount sufficient to reduce the pH to below the pKa of the sulfonamide or sulfonylurea herbicide. Since the pKa's of the sulfonamide and sulfonylurea herbicides are generally all below about 5, the pH of the formulations of the present invention in all cases will be below about 5. It has been found that the above herbicides substantially lose their herbicidal activity when simply acidified to below their pKa. However, we have made the surprising discovery that, if a cationic surfactant is also included in the acidic mixture, the herbicidal activity is restored and crop selectivity maintained, but phytotoxicity levels are substantially reduced.

It has also been found that crop selectivity and overall herbicidal activity can be retained as long as the pH is maintained below the said pKa value, and the cationic surfactant is present.

The order of the mixing of the components is not critical. The composition may be prepared as a concentrate wherein the sulfonamide or sulfonylurea herbicide is mixed with sufficient amounts of the acid and surfactant so that when the concentrate is mixed with water to prepare the final composition for field use, the desired pH is met and the cationic surfactant is present. Alternatively, the final composition for field use may be prepared by first mixing the acid, the surfactant and water, and adding the sulfonamide or sulfonylurea herbicide in the field immediately prior to use. The water, acid, surfactant and the active herbicide are employed in amounts to provide the desired response as set forth above.

The sulfonamide or sulfonylurea herbicides which are employed in the practice of the present invention are known. Many are articles of commerce and others are known from the literature, such as for example, U.S. Patents 4,605,433; 4,731,466 and 5,010,195 and EP-A-0142152, published May 22, 1985. Representative sulfonamide or sulfonylurea herbicides which can be employed in the practice of the present invention include, for example:

### Sulfonamides:

N-(2,6-difluorophenyl)-5-methyl-1,2,4-triazolo-(1,5-a)pyrimidine-2-sulfonamide;
2-(((7-chloro-5-methoxy-1,2,4-triazolo-(1,5-c)pyrimidin-2-yl)sulfonyl)amino)-3-fluorobenzoic acid, methyl ester;
N-(2,6-dichlorophenyl)-5-ethoxy-7-fluoro-1,2,4-triazolo-(1,5c)pyrimidine-2-sulfonamide;
2-(((7-fluoro-5-ethoxy-1,2,4-triazolo(1,5-c)pyrimidin-2-yl)sulfonyl)amino)-3-fluorobenzoic acid, methyl ester;
2-(((8-fluoro-5-methoxy-1,2,4-triazolo-(1,5-c)pyrimidin-2-yl)sulfonyl)amino)-3-fluorobenzoic acid, methyl ester;
N-(2,6-difluorophenyl)-5-methoxy-8-fluoro-1,2,4-triazolo-(1,5-c)pyrimidine-2-sulfonamide;
N-(2-chloro-6-fluorophenyl)-5-ethoxy-7-fluoro-1, 2,4-triazolo-(1,5c)pyrimidine-2-sulfonamide;
N-(2,6-dichloro-3-methylphenyl)-5,7-dimethoxy-1,2,4-triazolo(1,5a)pyrimidine-2-sulfonamide;
N-(2,6-dichloro-3-methylphenyl)-7-methoxy-5-methyl-1,2,4-triazolo(1,5a)pyrimidine-2-sulfonamide;
N-(2,6-dichloro-3-methylphenyl)-7-ethoxy-5-methyl-1,2,4-triazolo(1,5a)pyrimidine-2-sulfonamide;

### Sulfonylureas:

Ally (Metsulfuron-methyl):
   methyl 2-((4-methoxy-6-methyl-1,3,5-triazin-2-yl)-ureidosulfonyl)benzoate;
Classic: (Chlorimuron-ethyl:
   ethyl 2-(((((4-chloro-6-methoxypyrimidin-2-yl)amino)carbonyl)amino)sulfonyl) benzoate;
Express/Granstar (Tribenuron-methyl):
   methyl 2-(((((4-methoxy-6-methyl-1,3,5-triazin-2-yl)methylamino)carbonyl)amino)sulfonyl)benzoate;
Glean (Chlorsulfuron):
   1-(2-chlorophenylsulfonyl)-3-(4-methoxy-6-methyl-1,3,5-triazin-2-yl)urea;
Harmony (Thifensulfuron):
   3-((((N-(4-methoxy-6-methyl-1,3,5-triazin-2-yl)amino)carbonyl)amino)sulfonyl)-2-thiophenecarboxylic acid;

Acids which are useful in preparing the formulations of the present invention are those which are capable of reducing the pH of the formulation to below the pKa of the active herbicides and are not reactive with or otherwise detrimental to the activity of the sulfonamide or sulfonylurea herbicides. Representative acids include, for example:

| | |
|---|---|
| acetic acid | citric acid |
| lactic acid | glycolic acid |
| oxalic acid | maleic acid |
| malonic acid | phthalic acid |
| tartaric acid | sulfuric acid |
| nitric acid | nitrous acid |
| hydrochloric acid | pyrophosphoric acid |
| phosphoric acid | propionic acid |
| dodecylbenzenesulfonic acid | |

The acid may itself be pesticidally active, for example it may be a herbicide, an insecticide, or a fungicide. Particularly, it may be a herbicidal acid for example a herbicidal carboxylic acid, such as:

| | |
|---|---|
| clopyralid | 2,4-D, |
| 2,4-DP | dicamba |
| dioclorprop-P | fluroxypyr |
| MCPA | MCPP |
| mecoprop-P | picloram |
| triclopyr | |

Mixtures of two or more such acids may also be employed.

The term "cationic surfactant" as used herein is intended to mean any surfactant which will function in a cationic manner at the particular pH employed. This includes not only surfactants normally regarded as cationic surfactants, but also surfactants which function as cationic surfactants on protonation in an acid medium, for example, alkoxylated amines such as cocoamine ethoxylated with 15 moles of ethylene oxide per mole, and amphoteric surfactants, such as alkyldimethyl betaines e.g AMPHOLAK BCM-30 or an alkylamphopolycarboxypropionate, e.g. AMPHOLAK 7CY.

Many of such surfactants are listed in McCutchen's Emulsifiers and Detergents, McCutchen Division, MC publishing Co. Glen Rock, NJ USA, 1990 North American Edition and 1990 International Edition. Surfactants which can be employed include, for example:
- Arquad C-33W:: N-alkyl trimethyl ammonium chloride (from coco acids); a product of Akzo, Chemical Division;
- Ethomeen C-25:: 15 mole cocoamine ethoxylate; a product of Akzo, Chemical Division;
- Genamin O-200:: fatty amine ethoxylate (oleyl; 20 moles ethylene oxide); a product of American Hoechst Corp.;
- Genamin S-200:: fatty amine ethoxylate (stearyl; 20 moles ethylene oxide); a product of American Hoechst Corp.;
- Team:: an ethoxylated tallow amine in butanol; a Trade Mark of Monsanto Chemical Co.

It is important that surfactants which are cationic (in the sense explained above) be employed, since anionic and nonionic surfactants have not been found to be effective in reducing phytotoxicity and retaining selective crop activity at the same time.
The concentration of the active sulfonamide or sulfonylurea herbicide in the composition generally is from about 0.05 to about 95 percent by weight or more. Concentrations from about 5 to about 80 percent by weight are often preferred.

The amount of acid present in the composition generally is sufficient to reduce the pH to below about 5, i.e., below the pKa of the sulfonamide or sulfonylurea herbicides. The specific amount employed depends on the specific sulfonamide or sulfonylurea herbicide and in particular on its specific pKa. It also depends on such factors as the functionality of the acid, the amount of water to be employed in the final field application, and its pH.

Polybasic acids are preferred both because lower quantities are necessary, and because they provide a buffering effect at the chosen pH. Phosphoric acid is particularly preferred. Phosphoric acid is generally employed in an amount such as to provide in the final dilution a concentration of from 0.01 to 0.5 weight percent.

The amount of cationic surfactant present in concentrate compositions according to the invention will generally be in the range of from about 1 percent to about 50 percent, preferably from 5 percent to 20 percent, and more preferably from 7 percent to 15 percent by weight of the composition.

The present invention also embraces the employment of sulfonamides or sulfonyl ureas in combination with one or more additional pesticidal compounds. Such additional pesticidal compounds may be other types of herbicides, plant growth regulators, insecticides, nematocides, miticides, arthropodicides, fungicides or bactericides that are compatible with the compounds of the present invention in the aqueous medium used for application and which are not antagonistic to the activity of the active compounds employed in the present concentrate nor whose herbicidal activity would be adversely affected by being employed at a pH of below about 5. As indicated above, such compounds may be acidic. Non-acidic such compounds may also be employed. Accordingly, in such embodiments, the additional pesticidal compound(s) is employed as a supplemental toxicant or as an additament. Such additional pesticidal compounds may generally be present in a weight ratio of from 1:100 to 100:1 based on the sulfonamide or sulfonyl urea.

The exact amount of the composition to be applied is dependent not only on the specific active ingredient contained therein, but also on the particular action desired, the plant species to be controlled, the stage of growth thereof as well as the specific part of the plant to be contacted.

The compositions are normally applied in a herbicidally effective amount which is an amount sufficient to selectively kill and control the broadleaf weeds without appreciably affecting the grass crops. The plants are usually treated so as to provide the active material at a dosage of about 1.0 to 50.0 preferably from 2 to 25 g/hectare. Representative broadleaf weeds which can be controlled include *Amaranthus retroflexus, Brassica napus, Chenopodium album* (lambsquarters), *Fumaria officinalis, Galium aparine, Lamium purpureum, Matricaria inodora, Papaver rhoeas, Polygonum convolvulus, Stellaria media, Veronica hederifolia, Veronica persica* and *Viola arvensis*.

The following examples illustrate the present invention and the manner by which it can be practised but, as such, should not be construed as limitations upon the overall scope of the same.

### Example I:

Representative compositions of the present invention were evaluated to determine their effectiveness in postemergent operations.

Aqueous dispersions were prepared by admixing a predetermined amount of N-(2,6-dichloro-3-methylphenyl)-5,7-dimethoxy-1,2,4-triazolo[1,5-a]pyrimidine-2-sulfonamide (pKa = 5.25) with an aqueous solution containing a predetermined amount of phosphoric acid and a predetermined amount of an ethoxylated fatty amine surfactant (Team) to give aqueous dispersions containing varying amounts of the compound, as the sole toxicant. Another dispersion was prepared by admixing water with a mixture comprised of a predetermined amount of N-(2,6-dichloro-3-methylphenyl)-5,7-dimethoxy-1,2,4-triazolo[1,5-a]pyrimidine-2-sulfonamide (pKa = 5.25), a predetermined amount of phosphoric acid and a predetermined amount of an ethoxylated fatty amine surfactant (Team) to give aqueous dispersions containing varying amounts of the compound, as the sole toxicant.

Seeds of the plant species wheat cv Avalon, *Chenopodium album* (CA), *Fumaria officinalis* (FO), *Galium aparine* (GA) and *Viola arvensis* (VA) were planted in beds of good agricultural peat based soil and grown in a greenhouse. After the plants had emerged and had grown to a height of from 2-8 inches (depending on the plant species), separate beds of the plants were sprayed with one of the above-prepared compositions at a predetermined treating rate in grams of the active ingredient per hectare (g/ha). other beds were treated only with a water-surfactant (Team) mixture, containing no active compound, and others containing the active compound and surfactant, but no acid, to serve as controls. After treatment, the beds were maintained for three weeks under greenhouse conditions conducive for good plant growth. At the end of a 21 day period after treatment (AT), the beds were examined to determine the percentage of leaf loss of the wheat plants and the amount of kill and control of the weed species. The results of these examinations are set forth in Table I.

### Example II:

Representative compositions of the present invention were evaluated to determine their effectiveness in postemergent operations.

Aqueous dispersions were prepared by admixing a predetermined amount of N-(2,6-dichloro-3-methylphenyl)-5,7-dimethoxy-1,2,4-triazolo[1,5-a]pyrimidine-2-sulfonamide (pKa = 5.25) with (a) an aqueous solution containing a predetermined amount of phosphoric acid and a predetermined amount of the surfactant Team; (b) an aqueous solution containing a predetermined amount of acetic acid and a predetermined amount of the surfactant Team; (c) an aqueous solution containing a predetermined amount of phosphoric acid and a predetermined amount of Ethomeen C-25 surfactant (C-25) or (d) an aqueous solution containing a predetermined amount of acetic acid and a predetermined amount of Ethomeen C-25 to give an aqueous dispersion containing the compound, as the sole toxicant.

Seeds of the plant species wheat cv Avalon and *Galium aparine* (GA) were planted in beds of good agricultural peat based soil and grown in a greenhouse.
After the plants had emerged and had grown to a height of from 2-8 inches (depending on the plant species), separate beds of the plants were sprayed with one of the above-prepared compositions at a treating rate of 12 g/ha. Other beds were treated only with a water-surfactant mixture, containing no active compound, and others containing the active compound and surfactant, but no acid, to serve as controls. After treatment, the beds were maintained for three weeks under greenhouse conditions conducive for good plant growth. At the end of a 22 day period, the beds were examined to determine the percentage of leaf loss of the wheat plants and the amount of kill and control of the weed specie. The results of these examinations are set forth in Table II.

### Example III:

Representative compositions of the present invention were evaluated to determine their effectiveness in postemergent operations.

Aqueous dispersions were prepared by admixing a predetermined amount of N-(2,6-dichloro-3-methylphenyl)-5,7-dimethoxy-1,2,4-triazolo[1,5-a]pyrimidine-2-sulfonamide (pKa = 5.25) with (a) an aqueous solution containing a predetermined amount of phosphoric acid and a predetermined amount of the surfactant Team or (b) an aqueous solution containing a predetermined amount of phosphoric acid and a predetermined amount of Ethomeen C-25 (C-25) to give an aqueous dispersion containing the compound, as the sole toxicant.

Seeds of the plant species wheat cv Avalon and cv Norman and the weed species *Chenopodium album* (CA), *Fumaria officinalis* (FO), *Galium aparine* (GA), *Papaver rhoeas* (PR), and *Viola arvensis* (VA) were planted in beds of good agricultural peat based soil and grown in a greenhouse. After the plants had emerged and had grown to a height of from 2-8 inches (depending on the plant species), separate beds of the plants were sprayed with one of the above-prepared compositions at a treating rate of 12 g/ha. Other beds were treated only with a water-surfactant mixture, containing no active compound, and others containing the active compound and surfactant, but no acid, to serve as controls. After treatment, the beds were maintained for three weeks under greenhouse conditions conducive for good plant growth. At the end of a 21 day period after treatment, the beds were examined to determine the percentage of leaf loss of the wheat plants and the amount of kill and control of the weed specie. The results of these examinations are set forth below in Table III.

### Example IV:

Representative compositions of the present invention were evaluated to determine their selectivity to corn (maize) in postemergent operations.

Aqueous dispersions were prepared by admixing a predetermined amount of Tribenuron (pKa = 5.0) with an aqueous solution containing a predetermined amount of phosphoric acid and a predetermined amount of the surfactant Team to give aqueous dispersions containing varying amounts of the compound, as the sole toxicant.

Seeds of the plant species Corn (maize) cv Golden Bantam, *Amaranthus retroflexus* (AR) and *Chenopodium album* (CA) were planted in beds of good agricultural peat based soil and grown in a greenhouse.
After the plants had emerged and had grown to a height of from 2-8 inches (depending on the plant species), separate beds of the plants were sprayed with one of the above-prepared compositions at treatment rates as shown in Table IV. Other beds were treated only with a water-surfactant mixture, containing no active compound, and others containing the active compound and surfactant, but no acid, to serve as controls. After treatment, the beds were maintained for three weeks under greenhouse conditions conducive for good plant growth. At the end of 7 day, 14 day and 21 day periods, the beds were examined to determine the percentage of damage of the corn plants and the amount of kill and control of the weed species.
The results of these examinations are set forth below in Table IV.

### Example V:

Representative compositions of the present invention were evaluated to determine their selectivity to barley in postemergent operations.

Aqueous dispersions were prepared by admixing a predetermined amount of Metsulfuron-methyl (pKa = 3.3) with an aqueous solution containing a predetermined amount of phosphoric acid and a predetermined amount of the surfactant Team to give aqueous dispersions containing varying amounts of the compound, as the sole toxicant.

Seeds of the plant species barley cvs Golden Promise, *Chenopodium album* (CA), *Fumaria officinalis* (FO), *Galium aparine* (GA), *Papaver rhoeas* (PR), and *Viola arvensis* (VA) were planted in beds of good agricultural peat based soil and grown in a greenhouse. After the plants had emerged and had grown to a height of from 2-8 inches (depending on the plant species), separate beds of the plants were sprayed with one of the above-prepared compositions at a treatment rate as shown in Table V. Other beds were treated only with a water-surfactant mixture, containing no active compound, and others containing the active compound and surfactant, but no acid, to serve as controls. After treatment, the beds were maintained for two weeks under greenhouse conditions conducive for good plant growth. At the end of a 14 day period, the beds were examined to determine the percentage of damage of the barley plants and the amount of kill and control of the weed species. The results of these examinations are set forth in Table V.

**Table I**

| Test Mixture | Treating Rate in g/ha | pH | % leaf loss of Wheat 21 days AT | % control of indicated weeds 21 days AT | | | |
|---|---|---|---|---|---|---|---|
| | | | | CA | FO | GA | VA |
| compound + water/Team | 50.00 | 7.56 | 5.0 | 95 | 92 | 86 | 78 |
| " | 25.00 | 7.68 | 7.0 | 94 | 93 | 92 | 69 |
| " | 12.50 | 7.78 | 8.0 | 92 | 90 | 89 | 56 |
| " | 6.25 | 7.78 | 4.0 | 89 | 82 | 86 | 62 |
| compound + water/acid/Team | 50.00 | 2.78 | 0.0 | 83 | 68 | 82 | 73 |
| " | 25.00 | 2.75 | 0.0 | 77 | 68 | 80 | 73 |
| " | 12.50 | 2.78 | 0.0 | 76 | 60 | 75 | 58 |
| " | 6.25 | 2.78 | 0.0 | 76 | 65 | 83 | 65 |
| compound/acid/Team + water | 50.00 | 3.36 | 0.0 | 86 | 75 | 85 | 70 |
| " | 25.00 | 3.23 | 0.0 | 77 | 72 | 91 | 77 |
| " | 12.50 | 3.28 | 0.0 | 72 | 70 | 79 | 76 |
| " | 12.50 | 3.28 | 0.0 | 72 | 70 | 79 | 76 |
| " | 6.25 | 3.41 | 0.0 | 64 | 64 | 77 | 70 |
| control | - | 7.4 | 1.0 | 0.0 | 0.0 | 0.0 | 0.0 |

**TABLE II**

| Text Mixture | pH | % leaf loss in Wheat 22 days after treatment | % control of GA 22 days after treatment |
|---|---|---|---|
| Compound + Team | 7.5 | 7.0 | 72 |
| Compound + acetic acid + Team | 5.1 | 1.0 | 57 |
| Compound + phosphoric acid + Team | 4.9 | 0.0 | 82 |
| Compound + C-25 | 7.5 | 10.0 | 78 |
| Compound + acetic acid + C-25 | 5.1 | 0.0 | 60 |
| Compound + phosphoric acid + C-25 | 4.9 | 0.0 | 66 |
| Control | 7.4 | 0.0 | 0.0 |

**TABLE III**

| Test mixture | Treating Rate in g/ha | pH | % leaf loss of Wheat 21 days AT | | % control of indicated weeds 21 days AT | | | | |
|---|---|---|---|---|---|---|---|---|---|
| | | | Avalon | Norman | CA | FO | GA | PR | VA |
| compound + Team | 25.00 | 7.76 | 14.0 | 21.0 | 95 | 96 | 93 | 98 | 90 |
| compound + acid + Team | 25.00 | 4.11 | 0.0 | 0.0 | 82 | 81 | 78 | 89 | 97 |
| compound + 33W | 25.00 | 7.34 | 5.0 | 5.0 | 91 | 97 | 93 | 93 | 97 |
| compound + acid + 33W | 25.00 | 4.73 | 0.0 | 0.0 | 68 | 81 | 86 | 73 | 73 |
| control | - | 7.4 | 0.0 | 0.0 | 0.0 | 0.0 | 0.0 | 0.0 | 0.0 |

**TABLE IV**

| Test mixture | Treating Rate in g/ha (applied in 200 l/ha water) | pH | % damage to corn plants at indicated days | | | height of corn plants in cm at indicated days | | | % control of CA at indicated days | | | % control of AR at indicated days | | | |
|---|---|---|---|---|---|---|---|---|---|---|---|---|---|---|---|
| | | | 7 | 14 | 21 | 7 | 14 | 21 | 7 | 14 | 21 | 7 | 14 | | 21 |
| compound + Team | 20.00 | 7.76 | 11 | 45 | 52 | 20 | 24 | 28 | 76 | 88 | 99 | 84 | 99 | | 99 |
| " | 10.00 | 8.52 | 15 | 16 | 41 | 21 | 28 | 35 | 78 | 94 | 100 | 86 | 99 | | 100 |
| " | 5.0 | 8.21 | 21 | 14 | 10 | 20 | 45 | 69 | 79 | 88 | 99 | 84 | 96 | | 99 |
| " | 2.5 | 8.20 | 9 | 5 | 2 | 29 | 61 | 88 | 81 | 87 | 98 | 83 | 99 | | 99 |
| compound+ acid + Team | 20.00 | 2.83 | 6 | 0 | 0 | 36 | 70 | 95 | 78 | 88 | 96 | 79 | 95 | | 97 |
| " | 10.00 | 2.81 | 0 | 0 | 0.0 | 38 | 70 | 94 | 80 | 92 | 99 | 88 | 99 | | 99 |
| " | 5.0 | 2.82 | 0 | 0 | 0 | 42 | 77 | 95 | 77 | 96 | 98 | 85 | 97 | | 98 |
| " | 2.5 | 2.79 | 0 | 0 | 0 | 39 | 73 | 98 | 80 | 90 | 91 | 81 | 87 | | 68 |
| control | - | 7.65 | 0 | 0 | 0 | 49 | 82 | 100 | 0.0 | 0.0 | 0.0 | 0.0 | 0.0 | | 0.0 |

**TABLE V**

| Test mixture | Treating Rate in g/ha (applied in 200 l/ha water) | pH | % visual damage to barley plants 14 days AT | % of barley plants with tillers 14 days AT | % control of weeds 14 days AT | | | | |
|---|---|---|---|---|---|---|---|---|---|
| | | | | | CA | FO | GA | PR | VA |
| compound + Team | 24.0 | 7.8 | 31 | 69 | - | - | - | - | - |
| " | 12.5 | 8.40 | 28 | 29 | - | - | - | - | - |
| " | 6.25 | 8.07 | 13 | 17 | 95 | 74 | 64 | 96 | 84 |
| compound + acid + Team | 24.0 | 3.03 | 8 | 2 | - | - | - | - | - |
| " | 12.5 | 3.0 | 11 | 7 | - | - | - | - | - |
| " | 6.25 | 2.97 | 3 | 7 | 97 | 68 | 65 | 94 | 89 |
| control | - | 7.4 | 0 | 0 | 0.0 | 0.0 | 0.0 | 0.0 | 0.0 |

## Claims

1. A herbicidal composition suitable for dilution with water before use, comprising
a. a sulfonamide or sulfonylurea herbicide, together with
b. an inorganic or organic acid, and
c. a cationic surfactant, wherein the amount of the inorganic or organic acid is sufficient to reduce the pH of the solution obtained by formulating the composition with water to a strength suitable for use such that the resulting pH is below the pKa of the said herbicide.

2. An aqueous herbicidal composition, comprising
a. a sulfonamide or sulfonylurea herbicide, together with
b. an inorganic or organic acid, and
c. a cationic surfactant,
wherein the concentration of the herbicide in the composition is such that the aqueous composition is suitable for direct application as a post-emergent herbicide, and wherein the amount of the inorganic or organic acid in the aqueous composition is sufficient to reduce the pH of the composition to below the pKa of the said herbicide.

3. A composition as claimed in Claim 1 or Claim 2, wherein the sulfonamide or sulfonylurea herbicide is N-(2,6-dichloro-3-methylphenyl)-5,7-dimethoxy-1,2,4-triazolo[1,5-a]-pyrimidine-2-sulfonamide, Tribenuron, or Metsulfuron-methyl.

4. A composition as claimed in any one of the preceding Claims, wherein the acid is phosphoric acid, citric acid, or propionic acid.

5. A composition as claimed in any one of the preceding Claims, wherein the cationic surfactant is a quaternary alkyl ammonium salt, an alkoxylated amine, or an amphoteric surfactant.

6. A method of preparing a composition as claimed in Claim 2, which method comprises diluting a concentrate composition as claimed in Claim 1.

7. A method of preparing a composition as claimed in Claim 2, which method comprises adding the sulfonamide or sulfonylurea to a solution of the acid and the cationic surfactant in water.

8. The use of an inorganic or organic acid, and a cationic surfactant to reduce the pH of an aqueous herbicidal composition comprising a sulfonamide or sulfonylurea herbicide to below the pKa of said herbicide, thereby to reduce the phytotoxicity of the said herbicide.

9. A method for reducing the phytotoxicity of a sulfonamide or sulfonylurea herbicide which comprises mixing the said herbicide with an inorganic or organic acid, and a cationic surfactant.

10. A method for the selective post-emergent kill and control of broadleaf weeds growing in the presence of grassy crop plants which method comprises contacting said plants with a herbicidally effective amount of a composition as claimed in Claim 2.

## Patentansprüche

1. Herbizide Zusammensetzung, die zum Verdünnen mit Wasser vor der Anwendung geeignet ist, umfassend:
a. ein Sulfonamid- oder Sulfonylharnstoffherbizid, zusammen mit
b. einer anorganischen oder organischen Säure und
c. einem kationischen oberflächenaktiven Mittel, worin die Menge der anorganischen oder organischen Säure ausreichend ist, um den pH der Lösung zu verringern, die durch Formulieren der Zusammensetzung mit Wasser in einer zur Verwendung geeigneten Konzentration, derart, daß der resultierende pH unter dem pKa des Herbizids ist, erhalten wird.

2. Wässrige herbizide Zusammensetzung, umfassend:
a. ein Sulfonamid- oder Sulfonylharnstoffherbizid, zusammen mit
b. einer anorganischen oder organischen Säure und
c. einem kationischen oberflächenaktiven Mittel, worin die Konzentration des Herbizids in der Zusammensetzung derart ist, daß die wäßrige Zusammensetzung für direkte Anwendung als ein Nachauflaufherbizid geeignet ist und worin die Menge der anorganischen oder organischen Säure in der wäßrigen Zusammensetzung ausreichend ist, um den pH der Zusammensetzung unter den pKa des Herbizids zu erniedrigen.

3. Zusammensetzung nach Anspruch 1 oder Anspruch 2, worin das Sulfonamid- oder Sulfonylharnstoffherbizid N-(2,6-Dichlor-3-methylphenyl)-5,7-dimethoxy-1,2,4-triazol[1,5-a]-pyrimidin-2- sulfonamid, Tribenuron oder Metsulfuronmethyl ist.

4. Zusammensetzung nach einem der vorhergehenden Ansprüche, worin die Säure Phosphorsäure, Zitronensäure oder Propionsäure ist.

5. Zusammensetzung nach einem der vorhergehenden Ansprüche, worin das kationische oberflächenaktive Mittel ein quaternäres Alkylammoniumsalz, ein alkoxyliertes Amin oder ein amphoteres oberflächenaktives Mittel ist.

6. Verfahren zum Herstellen einer Zusammensetzung nach Anspruch 2, wobei das Verfahren Verdünnen einer Konzentratzusammensetzung nach Anspruch 1 umfaßt.

7. Verfahren zum Herstellen einer Zusammensetzung nach Anspruch 2, wobei das Verfahren Zugeben des Sulfonamids oder Sulfonylharnstoffs zu einer Lösung der Säure und des kationischen oberflächenaktiven Mittels in Wasser umfaßt.

8. Verwendung einer anorganischen oder organischen Säure und eines kationischen oberflächenaktiven Mittels zum Verringern des pH einer wäßrigen herbiziden, ein Sulfonamid- oder Sulfonylharnstoffherbizid enthaltenden Zusammensetzung unter den pKa des Herbizids, um dadurch die Phytotoxizität des Herbizids zu verringern.

9. Verfahren zum Verringern der Phytotoxizität eines Sulfonamid- oder Sulfonylharnstoffherbizids, umfassend Mischen des Herbizids mit einer anorganischen oder organischen Säure und einem kationischen oberflächenaktiven Mittel.

10. Verfahren zur selektiven Nachauflaufvernichtung und Bekämpfung von breitblättrigen Unkräutern, die in der Gegenwart von grasartigen Nutzpflanzen wachsen, wobei das Verfahren das Kontaktieren der Pflanzen mit einer herbizid wirksamen Menge einer Zusammensetzung nach Anspruch 2 umfaßt.

## Revendications

1. Composition herbicide diluable avec de l'eau avant utilisation, comprenant
a. un herbicide à base de sulfonamide ou de sulfonylurée, ensemble avec
b. un acide minéral ou organique, et
c. un agent de surface cationique,
la quantité d'acide minéral ou organique étant suffisante pour réduire le pH de la solution obtenue après dilution de la composition avec de l'eau, à une concentration appropriée pour être utilisée, de façon que le pH résultant soit inférieur au pKa dudit herbicide.

2. Composition aqueuse d'herbicide, comprenant
a. un herbicide à base de sulfonamide ou de sulfonylurée, ensemble avec
b. un acide minéral ou organique, et
c. un agent de surface cationique
la concentration de l'herbicide dans la composition étant telle que la composition aqueuse convienne pour l'application directe en tant qu'herbicide en post-émergence, et que la quantité de l'acide minéral ou organique dans la composition aqueuse soit suffisante pour réduire le pH de la composition en dessous de la valeur pKa dudit herbicide.

3. Composition selon la revendication 1 ou 2, dans laquelle le sulfonamide ou la sulfonylurée herbicide est le N-(2,6-dichloro-3-méthylphényl)-5,7-diméthoxy-1,2,4-triazolo[1,5a]pyrimidine-2-sulfonamide, le Tribénuron, ou le Metsulfuronméthyle.

4. Composition selon l'une quelconque des revendications précédentes, dans laquelle l'acide utilisé est l'acide phosphorique, l'acide citrique ou l'acide propionique.

5. Composition selon l'une quelconque des revendications précédentes, dans laquelle l'agent de surface cationique est un sel quaternaire d'alkyle ammonium, une amine alkoxylée ou un agent de surface amphotère.

6. Procédé de préparation d'une composition selon la revendication 2, procédé comprenant la dilution d'une composition concentrée selon la revendication 1.

7. Procédé de préparation d'une composition selon la revendication 2, procédé comprenant l'addition du sulfonamide ou de la sulfonylurée à une solution comprenant l'acide et l'agent de surface cationique dans l'eau.

8. Utilisation d'un acide minéral ou organique et d'un agent de surface cationique afin de réduire le pH d'une composition aqueuse d'herbicide comprenant un herbicide sulfonamide ou sulfonylurée en dessous de la valeur pKa dudit herbicide, réduisant ainsi la phytotoxicité dudit herbicide.

9. Procédé pour réduire la phytotoxicité d'un herbicide sulfonamide ou sulfonylurée qui comprend le mélange dudit herbicide avec un acide minéral ou organique et avec un agent de surface cationique.

10. Procédé de lutte sélective, en post-émergence, et lutte contre les mauvaises herbes dicotylédones, poussant en présence d'une plante de culture, procédé comprenant la mise en contact desdites plantes avec une quantité efficace en tant qu'herbicide d'une composition selon la revendication 2.
